# EUROPÄISCHE PATENTSCHRIFT

(11) **EP 2 416 980 B1**
(45) Veröffentlichungstag und Bekanntmachung des Hinweises auf die Patenterteilung: **06.03.2013**
(21) Anmeldenummer: 10713618.6
(22) Anmeldetag: 06.04.2010
(51) Int. Cl.: B60L 7/10, B60L 7/22, H02P 3/18, H02P 3/22

(54) **VORRICHTUNG ZUR ANKOPPLUNG VON ENERGIESPEICHERN AN EINEM SPANNUNGSZWISCHENKREIS EINES TRAKTIONSSTROMRICHTERS**
APPARATUS FOR COUPLING ENERGY STORAGE UNITS TO THE DC LINK OF A TRACTION POWER CONVERTER
DISPOSITIF PERMETTANT DE COUPLER DES ACCUMULATEURS D'ENERGIE AU CIRCUIT DE TENSION INTERMÉDIAIRE D'UN CONVERTISSEUR DE COURANT DE TRACTION

(30) Priorität: 09.04.2009 DE 102009017254
(43) Veröffentlichungstag der Anmeldung: 15.02.2012
(73) Patentinhaber: Siemens Aktiengesellschaft, 80333 München (DE)
(72) Erfinder: FUCHS, Andreas, 91056 Erlangen (DE)
(86) Internationale Anmeldenummer: PCT/EP2010/054494
(87) Internationale Veröffentlichungsnummer: WO 2010/115865

(56) Entgegenhaltungen:
- EP-A1- 1 022 181
- EP-A2- 0 857 605
- DE-A1- 10 330 284
- DE-C1- 19 547 464
- US-A- 5 710 699
- US-A- 6 002 603

## Beschreibung

Die Erfindung bezieht sich auf eine Vorrichtung zur Ankopplung von Energiespeichern an einem Spannungszwischenkreis eines Traktionsstromrichters, der eine Einspeiseschaltung, einen Spannungszwischenkreiskondensator und einen selbstgeführten Stromrichter aufweist.

Ein Traktionsstromrichter, insbesondere für einen Triebzug, weist typischerweise einen Pulsstromrichter, der ein selbstgeführter Stromrichter ist, auf, der wenigstens eine Induktionsmaschine, insbesondere eine Asynchronmaschine, speist. Einen Überblick über Stromrichterkonzepte für Ein- und Mehrsystemanwendungen ist der Veröffentlichung mit dem Titel "Grenzenloser Verkehr - Stromrichterkonzepte für Mehrsystemlokomotiven und -triebzüge" von Hans-Günter Eckel, abgedruckt in der DE-Zeitschrift "antriebstechnik", Nr. 3, 2007, Seiten 26 bis 33. Diese Stromrichterkonzepte unterscheiden sich hauptsächlich in der Einspeiseschaltung, da diese aus einem Einphasen-Gleichspannungsnetz, einem Einphasen-Wechselspannungsnetz oder aus beiden eine für den Pulsstromrichter benötigte Gleichspannung generiert und dafür sorgt, dass eine von den Antriebsmotoren einer Lokomotive bzw. eines Triebzuges geforderte Leistung aus dem Netz zur Verfügung gestellt wird.

Diese Traktionsstromrichter weisen Energiespeicher für eine vorübergehende Energieversorgung von Schienenfahrzeugen auf. Als Energiespeicher werden bevorzugt Doppelschichtkondensatoren verwendet, die auch als "Superkondensator" bzw. "Supercap" bzw. "Ultracap" bezeichnet werden. Doppelschichtkondensatoren sind im Vergleich zu konventionellen Batterien tief entladefest und einfach zu laden. Doppelschichtkondensatoren gibt es im Handel in einer zylindrisch gewickelten oder einer geschichtet prismatischen Zellenkonstruktion. Für die Anwendungsfällen "Elektrostraßenfahrzeuge" oder Netzanwendungen werden Kondensatorzellen zu einem Kondensatormodul verschaltet, die beispielsweise vierzig Kondensatorzellen aufweisen.

Der Spannungszwischenkreis eines Traktionsstromrichters weist neben den Spannungszwischenkreiskondensator eine Vorrichtung zur Überspannungsbegrenzung auf, die vorrangig zum Schutz des Pulsstromrichters benötigt wird. Mittels einer solchen Vorrichtung werden schnelle Überspannungen begrenzt, die beispielsweise durch Sprünge in der Netzspannung oder durch Leistungsschwankungen in der Traktionsleistung verursacht werden. Neben dieser Vorrichtung zur Überspannungsbegrenzung sind außerdem ein Bremssteller und ein Saugkreis im Spannungszwischenkreis angeordnet.

Der Saugkreis wird nur bei einer Versorgung aus einem Einphasen-Wechselspannungsnetz mit einer Netzfrequenz von 162/3 Hz benötigt. Die Resonanzfrequenz dieses Saugkreises ist auf die doppelte Netzfrequenz abgestimmt. Die Filterung der Netzfrequenzanteile geschieht optimal, da der doppelte Netzfrequenzanteil in der Zwischenkreiswelligkeit fast vollständig eliminiert wird. Die hochfrequenten und breitbandigen Schaltfrequenzanteile werden über den Spannungszwischenkreiskondensator gefiltert. Die Abstimmung der Resonanzfrequenz des Saugkreises erfolgt in der Regel über mehrere parallel schaltbare Kondensatoren, die zu- oder weggeschaltet werden. Der Saugkreis, der ein Reinenschwingkreis, bestehend aus einer Kondensatorschaltung und einer Drossel, ist, hat im Bereich der Resonanzfrequenz einen besonders geringen Widerstand. Er wirkt somit als schmalbandiges Filter, das Signale in einem schmalen Frequenzbereich fast kurzschließt. Dieser Saugkreis ist elektrisch parallel zum Spannungszwischenkreiskondensator geschaltet. Da die Kondensatoren eines Saugkreises Energie speichern und bedarfsweise abgeben, stellt ein derartiger Saugkreis eine Vorrichtung zur Ankopplung eines Energiespeichers an einem Zwischenkreiskondensator dar.

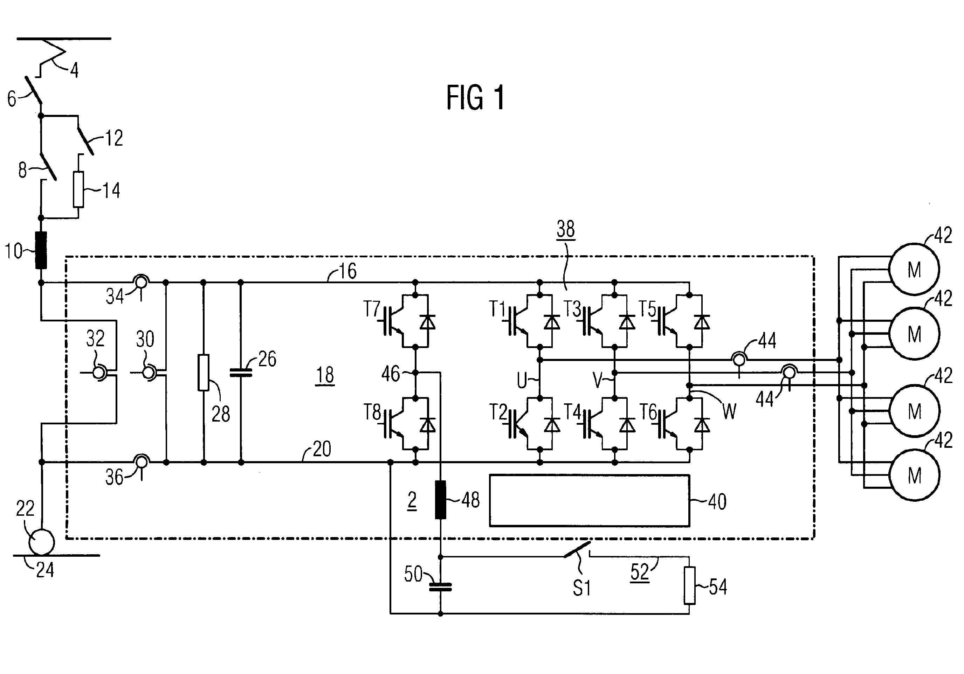

Aus der DE 103 30 284 A1 ist eine weitere Vorrichtung zur Ankopplung eines Energiespeichers bekannt. Eine derartige Vorrichtung in einem Spannungszwischenkreis eines Traktionsstromrichters eines Gleichspannungstriebzuges ist in der FIG 1 näher dargestellt. Gemäß diesem Hauptstromschaltbild ist eingangsseitig ein Stromabnehmer 4 mittels eines Trenners 6 und eines Netzschützes 8 mit einer Netzdrossel 10 verknüpft. Elektrisch parallel zum Netzschütz 8 ist eine Reihenschaltung eines Ladeschützes 12 und eines Vorladewiderstandes 14 geschaltet. Am zweiten Anschluss der Netzdrossel ist eine positive Stromschiene 16 eines Zwischenkreises 18 des Traktionsstromrichters angeschlossen. Eine negative Stromschiene 20 dieses Spannungszwischenkreises 18 ist mittels eines Rades 22 des Triebzuges mit der Schiene 24 elektrisch leitend verbunden. Der Spannungszwischenkreis 18 weist einen Zwischenkreiskondensator 26, einen Entladewiderstand 28, einen Zwischenkreisspannungswandler 30, einen Netzspannungswandler 32, zwei Stromwandler 34 und 36 und eine Vorrichtung 2 zur Ankopplung eines Energiespeichers 50 auf. Der Zwischenkreiskondensator 26, der Entladewiderstand 28, der Zwischenkreisspannungswandler 30 und die Vorrichtung 2 zur Ankopplung des Energiespeichers 50 sind zueinander elektrisch parallel und zwischen den beiden Stromschienen 16 und 20 des Spannungszwischenkreises 18 geschaltet.

Am Zwischenkreiskondensator 26 steht eine Gleichspannung an, die die Eingangsspannung für einen lastseitigen Stromrichter 38, insbesondere einen Pulsstromrichter, bildet. Dieser Pulsstromrichter 38 weist drei Brückenzweige mit jeweils zwei elektrisch in Reihe geschalteten abschaltbaren Halbleiterschalter T1, T2; T3, T4 und T5, T6 auf. Die zugehörigen Ansteuerungen für diese Halbleiterschalter T1 bis T6 sind in einer Steuervorrichtung 40 zusammengefasst. Die Ausgänge U, V und W dieses Pulsstromrichters 38 sind jeweils mit Fahrmotoren 42 verknüpft, wobei in zwei Ausgangsleitungen jeweils ein Motorstromwandler 44 angeordnet sind.

Die Vorrichtung 2 zur Ankopplung eines Energiespeichers 50 weist zwei abschaltbare Halbleiterschalter T7 und T8 auf, die elektrisch in Reihe geschaltet sind. Am Verbindungspunkt 46 dieser beiden abschaltbaren Halbleiterschalter T7 und T8 ist eine Induktivität 48 mit einem Anschluss angeschlossen, wobei der zweite Anschluss mittels des Energiespeichers 50, insbesondere eines Doppelschichtkondensators, mit der negativen Stromschiene 20 des Spannungszwischenkreises 18 elektrisch leitend verbunden ist. Elektrisch parallel zum Energiespeicher 50 ist ein zuschaltbarer Widerstand 52 schaltbar, wobei dieser zuschaltbare Widerstand 52 einen Schalter S1, insbesondere ein Schütz, und einen Widerstand 54 aufweist, die elektrisch in Reihe geschaltet sind. Die beiden abschaltbaren Halbleiterschalter T7 und T8 bilden mit der Induktivität einen Hoch- und Tiefsetzsteller, wobei Energie aus dem Zwischenkreis 18 in den Energiespeicher 50 und umgekehrt verschoben wird.

Als abschaltbarer Halbleiterschalter T7 und T8 sind **I**nsulated-**G**ate-**B**ipolar-**T**ransistoren (IGBT) vorgesehen. Dadurch entspricht diese Reihenschaltung einen Brückenzweig des Pulsstromrichters 38.

Der Doppelschichtkondensator 50 bezeichnet nicht nur einen Kondensator, sondern eine Vielzahl von diesen, die zu einem Kondensatormodul geschaltet sind. Trotz dieses Aufbaus wird wie beim Zwischenkreiskondensator 26 von einem Kondensator gesprochen. Dieser Doppelschichtkondensator 50 kann eine Kapazität von beispielsweise 10F bei einer Kondensatorspannung von beispielsweise 600V aufweisen.

Diese Vorrichtung 2 zur Ankopplung des Energiespeichers 50 wird in dieser Offenlegungsschrift als Vorrichtung zur Begrenzung einer Überspannung im Spannungszwischenkreis 18 eines Traktionsstromrichters verwendet. Tritt im Zwischenkreis eine Überspannung auf, die entweder durch Sprünge in der Netzspannung oder Leistungsschwankungen in der Traktionsleistung verursacht sind, so werden diese mit dem Zwischenkreisspannungswandler 30 erfasst und einer Steuereinrichtung der beiden abschaltbaren Halbleiterschalter T7 und T8 zugeführt. Diese nicht näher dargestellte Steuereinrichtung steuert den abschaltbaren Halbleiterschalter T7 und T8 derart, dass Energie in den Doppelschichtkondensator 50 verschoben wird. Durch diese Energieverschiebung wird die auftretende Überspannung abgebaut. Bei diesen genannten Überspannungen handelt es sich um kurzzeitige Überspannungen, die durch einen Tiefsetzstellerbetrieb der beiden abschaltbaren Halbleiterschalter T7 und T8 im Zwischenkreis 18 abgebaut werden.

Mit dem zuschaltbaren Widerstand 54, der elektrisch parallel zum Doppelschichtkondensator 50 schaltbar ist, wird die Spannung am Doppelschichtkondensator 50 auf einen vorbestimmten Grenzwert begrenzt. Unterschreitet die Kondensatorspannung einen unteren Grenzwert, so wird der Widerstand 54 wieder getrennt. Auf diese Weise wird verhindert, dass der Doppelschichtkondensator 50 seine Nennspannung für eine längere Zeit überschreiten kann. Die gespeicherte Energie wird im Fahrbetrieb im Traktionsstromrichter zurückgegeben, so dass der Doppelschichtkondensator 50 auf einen Ladezustand gehalten wird, der immer ausreicht, eine Überspannung auf den Zwischenkreis aufzunehmen. Der Widerstand 54 wird somit nur bei längeren Überspannungen im Spannungszwischenkreis 18 verursacht durch Bremsen zum Abbau dieser Überspannung benötigt, ohne dabei einen eigenen Steller zu benötigen.

Mittels dieser Vorrichtung 2, mittels der ein Energiespeicher 50 an einem Spannungszwischenkreis 18 eines Traktionsstromrichters ankoppelbar ist, wird nicht nur Energie gespeichert, sondern gleichzeitig die Funktion "Bremsen" und "Überspannungsbegrenzung" ausgeführt. Diese bekannte Vorrichtung 2 weist den Nachteil auf, dass der den Spannungszwischenkreis speisende Strom eine Welligkeit aufweist.

Der Erfindung liegt nun die Aufgabe zugrunde, diese bekannte Vorrichtung derart weiterzubilden, dass die Stromwelligkeit im Spannungszwischenkreis reduziert wird.

Diese Aufgabe wird erfindungsgemäß durch die Merkmale des Anspruchs 1 gelöst.

Durch die erfindungsgemäße Ausbildung der Vorrichtung können zwei Energiespeicher an einem Spannungszwischenkreis eines Traktionsstromrichters angekoppelt werden. Über diese beiden Stellerzweige (Brückenzweige) sind die beiden Drosseln, die zur Glättung vorgesehen sind, derart miteinander verschaltet, dass die beiden Energiespeicher in Reihe oder parallel über die Drossel am Spannungszwischenkreiskondensator geschaltet werden können. Dadurch ist die Spannung an jedem Energiespeicher gleich der halben Zwischenkreisspannung bei der Reihenschaltung und gleich der Zwischenkreisspannung bei der Parallelschaltung dieser beiden Energiespeicher. In diesem zur Verfügung gestellten Spannungsbereich ist das Laden und Entladen der Energiespeicher über einen Aussteuergrad der abschaltbaren Halbleiterschalter der Stellerzweige frei einstellbar. Bei einem Spannungsverhältnis von 1 zu 2 kann 75% der Energie dieser beiden Energiespeicher genutzt werden. Durch diese erfindungsgemäße Vorrichtung ist es auch möglich, einen Energieaustausch zwischen diesen beiden Energiespeichern zu steuern. Dadurch werden die Energieinhalte in den beiden Energiespeichern einander angepasst.

Bei einer vorteilhaften Ausführungsform der Vorrichtung zur Ankopplung von Energiespeichern an einen Spannungszwischenkreis eines Traktionsstromrichters ist ein Anschluss eines jeden Brückenzweiges, an dem eine Drossel angeschlossen ist, mittels einer Schutzdiode mit einer positiven oder negativen Stromschiene des Spannungszwischenkreises elektrisch leitend verbunden. Dadurch wird automatisch verhindert, dass die Energiespeicher nicht überladen werden können. Sobald die Amplitude einer Spannung an einem Energiespeicher bei der Parallelschaltung dieser beiden Energiespeicher größer als die Amplitude der Zwischenkreisspannung plus der Durchlassspannung der Schutzdiode wird, wird diese Diode leitend und begrenzt dadurch den weiteren Anstieg der Spannung am Energiespeicher.

Bei einer weiteren vorteilhaften Ausführungsform der Vorrichtung zur Ankopplung von Energiespeichern ist elektrisch parallel zu jedem Energiespeicher ein Widerstand schaltbar. Durch diesen Widerstand wird die Spannung am Energiespeicher auf einen vorbestimmten Grenzwert begrenzt. Dadurch wird verhindert, dass der Energiespeicher überladen wird.

Zur weiteren Erläuterung der Erfindung wird auf die Zeichnung Bezug genommen, in der mehrere Ausführungsformen der Vorrichtung nach der Erfindung schematisch veranschaulicht sind.
- FIG 1: zeigt ein Hauptstromschaltbild eines Traktionsstromrichters mit einer bekannten Vorrichtung zur Ankopplung eines Energiespeichers, die
- FIG 2: zeigt eine erste Ausführungsform einer erfindungsgemäßen Vorrichtung, wobei in der
- FIG 3: eine zweite Ausführungsform und in der
- FIG 4: eine dritte Ausführungsform dieser erfindungsgemäßen Vorrichtung dargestellt sind, die
- FIG 5: zeigt ein Hauptstromschaltbild eines Traktionsstromrichters für den Einsatz in einem Wechselspannungsnetz und in der
- FIG 6: ist ein Hauptstromschaltbild eines Mehrsystem-Traktionsstromrichters dargestellt.

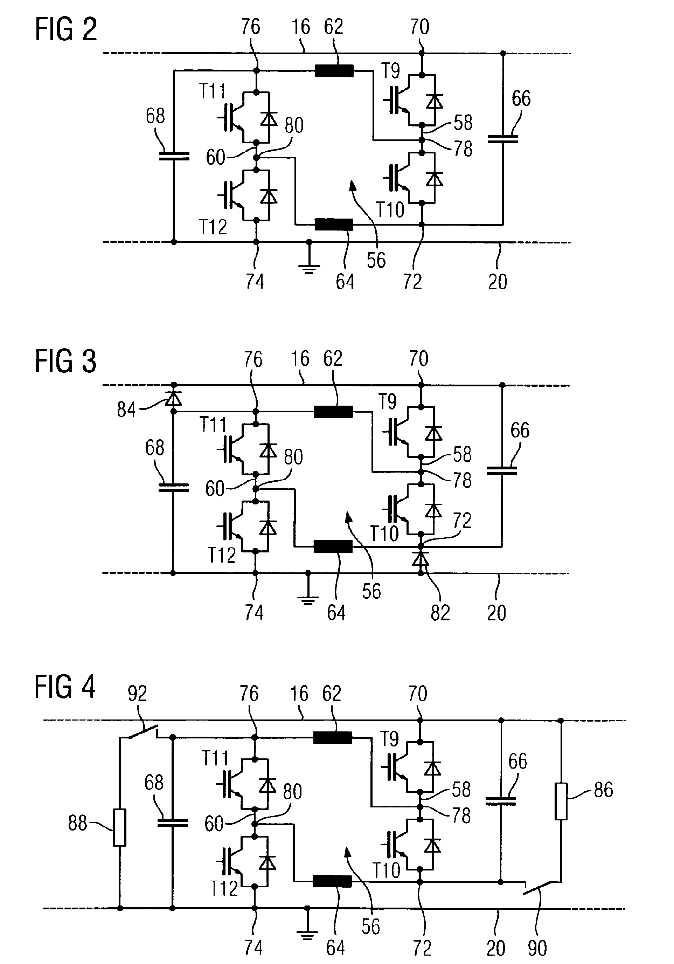

Gemäß der FIG 2 weist die Vorrichtung 56 nach der Erfindung zwei Brückenzweige 58 und 60, die auch jeweils als Stellerzweig bezeichnet werden, zwei Drosseln 62 und 64 und zwei Energiespeicher 66 und 68, insbesondere Doppelschichtkondensatoren, auf. Die Brückenzweige 58 und 60 weisen jeweils zwei abschaltbare Halbleiterschalter T9, T10 und T11, T12, die jeweils elektrisch in Reihe geschaltet sind. Als abschaltbare Halbleiterschalter T9 bis T12 sind IGBTs vorgesehen. Dadurch entsprechen diese beiden Brückenzweige 58 und 60 jeweils einem Brückenzweig des Pulsstromrichters 38. Elektrisch parallel zum Brückenzweig 58 bzw. 60 ist der Energiespeicher 66 bzw. 68 elektrisch parallel geschaltet. Der Brückenzweig 58 bzw. 60 mit dem parallel geschalteten Energiespeicher 66 bzw. 68 ist direkt mit einem seiner beiden Anschlüsse 70, 72 bzw. 74, 76 mit der positiven bzw. negativen Stromschiene 16 bzw. 20 des Spannungszwischenkreises 18 eines Traktionsstromrichters elektrisch leitend verbunden. Der andere Anschluss 72 bzw. 76 eines jeden Brückenzweiges 58 bzw. 60 der erfindungsgemäßen Vorrichtung 56 ist mittels einer Drossel 64 bzw. 62 mit einem Verbindungspunkt 80 bzw. 78 zweier abschaltbarer Halbleiterschalter T11, T12 bzw. T9, T10 des anderen Brückenzweiges 60 bzw. 58 elektrisch leitend verbunden.

Durch diese Verschaltung der beiden Brückenzweige 58 und 60 mittels der beiden Drosseln 62 und 64 können die beiden Energiespeicher 66 und 68 entweder elektrisch in Reihe oder elektrisch parallel zueinander geschaltet werden. Dadurch liegt dann an einem Energiespeicher 66 bzw. 68 entweder die halbe Zwischenkreisspannung (minimaler Wert) oder die volle Zwischenkreisspannung (maximaler Wert) an. Durch Ansteuerung der abschaltbaren Halbleiterschalter T9, T10 und T11, T12 der beiden Brückenzweige 58 und 60 kann ein Laden und Entladen der beiden Energiespeicher 66 und 68 frei eingestellt werden, sobald sich die Speicherspannung in einem Spannungsbereich zwischen minimaler und maximaler Speicherspannung befindet.

Ein Spannungsverhältnis von 1 zu 2 ist eine bevorzugte Dimensionierung, da dann bei den Energiespeichern 66 und 68, insbesondere Doppelschichtkondensatoren, 75% der Energie eines Energiespeichers 66 und 68 genutzt werden kann. Durch diese Verschaltung zweier Energiespeicher 66 und 68 mit Hilfe zweier Stellerzweige 58 und 60 und zweier Drosseln 62 und 64 ist auch ein Energieaustausch zwischen diesen Energiespeichern 66 und 68 durch entsprechende Ansteuerung der abschaltbaren Halbleiterschalter T9, T10 und T11, T12 der beiden Stellerzweige 58 und 60 möglich. Dadurch lassen sich die Energieinhalte in diesen beiden Energiespeichern 66 und 68 einander anpassen.

Mittels dieser Vorrichtung 56 in einem Spannungszwischenkreis eines Traktionsstromrichters kann nicht nur Energie für eine vorübergehende Energieversorgung eines Schienenfahrzeuges sichergestellt werden, sondern zusätzlich Restwelligkeit eines in den Zwischenkreis speisenden Stromes reduziert werden. Muss auf das Einbauvolumen und das Gewicht dieser Vorrichtung 56 bei einem Traktionsstromrichter eines Triebzuges geachtet werden, wird die Restwelligkeit nicht reduziert, wodurch aber die beiden Drosseln 62 und 64 kleiner und damit leichter und kostengünstiger ausfallen.

In der FIG 3 ist eine zweite Ausgestaltung der erfindungsgemäßen Vorrichtung 56 zur Ankopplung zweier Energiespeicher 66 und 68 dargestellt. Diese zweite Ausführungsform unterscheidet sich von der ersten Ausführungsform gemäß FIG 2 dadurch, dass zwischen dem Anschluss 72 bzw. 76 des Stellerzweiges 58 bzw. 60 eine Schutzdiode 82 bzw. 84 geschaltet ist. Diese Schutzdiode 82 bzw. 84 ist derart gepolt, dass sobald das Potential des Energiespeichers 66 bzw. 68 das Potential der Zwischenkreis des Traktionsstromrichters um die Durchlassspannung der Diode größer ist, wird die Schutzdiode 82 bzw. 84 leitend, wodurch der Energiespeicher bzw. 68 elektrisch parallel zum Zwischenkreiskondensator 26 des Traktionsstromrichters geschaltet ist. Somit ist der Energiespeicher 66 bzw. 68 spannungsmäßig am Spannungszwischenkreiskondensator des Traktionsstromrichters geklemmt. D.h., dass der Energiespeicher 66 bzw. 68 seine Nennspannung nicht überschreiten kann.

Die FIG 4 zeigt eine dritte Ausführungsform der erfindungsgemäßen Vorrichtung 56 zur Ankopplung zweier Energiespeicher 66 und 68 an einem Spannungszwischenkreis 18 eines Traktionsstromrichters. Diese dritte Ausführungsform der erfindungsgemäßen Vorrichtung unterscheidet sich von der ersten Ausführungsform gemäß FIG 2 dadurch, dass elektrisch parallel zum Energiespeicher 66 bzw. 68 eine Reihenschaltung eines Widerstandes 86 bzw. 88 und eines Schalters 90 bzw. 92 elektrisch parallel geschaltet ist. Diese Reihenschaltung stellt einen zuschaltbaren Widerstand dar. Der Widerstand 86 bzw. 88 wird mittels des Schalters 90 bzw. 92 elektrisch parallel zum Energiespeicher 66 bzw. 68 geschaltet, sobald die Spannung am Energiespeicher 66 bzw. 68 einen vorbestimmten Maximalwert erreicht. Durch dieses Zuschalten des Widerstandes 86 bzw. 88 elektrisch parallel zum Energiespeicher 66 bzw. 68 wird dieser Energiespeicher 66 bzw. 68 auf eine vorbestimmte Spannung, insbesondere Nennspannung, gehalten. Damit der Energiespeicher 66 bzw. 68 wieder Energie aufnehmen kann, wird dieser Energiespeicher 66 bzw. 68 entladen. Auf diese Weise wird der Energiespeicher 66 und 68 auf einen Ladezustand gehalten, um immer eine überschüssige Energie aus dem Spannungszwischenkreis 18 des Traktionsstromrichters aufnehmen zu können.

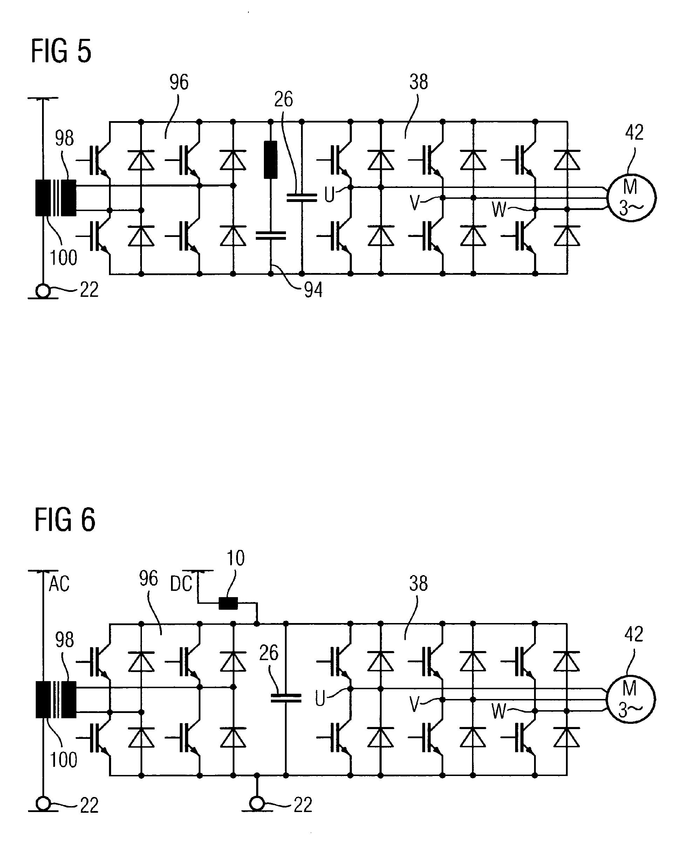

In der FIG 5 ist ein Hauptstromschaltbild eines Traktionsstromrichters für den Einsatz in einem Wechselspannungsnetz dargestellt. Dieses Stromrichterkonzept ist aus der eingangs genannten Veröffentlichung bekannt. Dieser Traktionsstromrichter weist neben einem Pulsstromrichter 38 und einem Zwischenkreiskondensator 26 einen Saugkreis 94 und einen Vierquadrantensteller 96 auf, der wechselspannungsseitig mit einer Sekundärwicklung 98 eines Traktionstransformators 100 elektrisch leitend verbunden ist. Anstelle dieses Saugkreises 94 kann die erfindungsgemäße Vorrichtung zur Ankopplung zweier Energiespeicher 66 und 68 verwendet werden. D.h., diese erfindungsgemäße Vorrichtung übernimmt zusätzlich die Funktionalität eines Saugkreises. Dadurch kann das dynamische Verhalten der Antriebsanlage eines Bahnfahrzeugs, insbesondere beim Bügelsprüngen und bei Gleit-/Schleudervorgängen, wesentlich verbessert werden. Dadurch wird eine höhere Ausnutzung des Traktionsstromrichters möglich und führt damit zu Gewichts- und Kosteneinsparungen.

Die FIG 6 zeigt ein Hauptstromschaltbild eines Mehrsystem-Traktionsstromrichters, der aus der eingangs genannten Veröffentlichung bekannt ist. Dieser Mehrsystem-Traktionsstromrichter weist keinen Saugkreis 94 auf, so dass im Wechselspannungsbetrieb aus einem AC-Netz mit einer Netzfrequenz von 50 Hz gespeist wird. Wird in einem derartigen Mehrsystem-Traktionsstromrichter die erfindungsgemäße Vorrichtung zur Ankopplung von Energiespeichern 66 und 68 verwendet, kann vorrangig Energie zur vorübergehenden Energieversorgung gespeichert werden. Dadurch verbessert sich die Energiebilanz des Traktionsstromrichters. Gleichzeitig übernimmt diese erfindungsgemäße Vorrichtung die Funktionalitäten eines Überspannungsbegrenzers und eines Saugkreises. D.h., die Bauelemente eines bisherigen separaten Überspannungsbegrenzers und eines separaten Saugkreises 94, die vom Gewicht nicht vernachlässigbar sind, werden nicht mehr gebraucht. Dadurch wird nicht nur am Einbauplatz, sondern auch am Gewicht, gespart.

## Patentansprüche

1. Vorrichtung (56) zur Ankopplung von Energiespeichern (66,68) an einem Spannungszwischenkreis (18) eines Traktionsstromrichters, der eine Einspeiseschaltung, einen Spannungszwischenkreiskondensator (26) und einen lastseitigen selbstgeführten Stromrichter (38) aufweist, wobei diese Vorrichtung (56) zwei Brückenzweige (58,60) mit jeweils zwei elektrisch in Reihe geschalteten abschaltbaren Halbleiterschaltern (T9,T10;T11,T12) und zwei Drosseln (62,64) aufweist, wobei jeweils einem Brückenzweig (58,60) ein Energiespeicher (66,68) elektrisch parallel geschaltet ist, wobei jeder Brückenzweig (58,60) mit einem Anschluss (70,74) mit einer positiven oder negativen Stromschiene (16,20) des Spannungszwischenkreises (18) und mit einem anderen Anschluss (72,76) mittels einer Drossel (64,62) mit einem Verbindungspunkt (80,78) zweier abschaltbarer Halbleiterschalter (T11,T12; T09,T10) des anderen Brückenzweiges (60,58) elektrisch leitend verbunden ist.

2. Vorrichtung (56) nach Anspruch 1, **dadurch gekennzeichnet, dass** der Anschluss (72,76) eines jeden Brückenzweiges (58,60), an dem eine Drossel (64,62) angeschlossen ist, mittels einer Schutzdiode (82,84) mit einer negativen oder positiven Stromschiene (16,20) des Spannungszwischenkreises (18) elektrisch leitend verbunden ist.

3. Vorrichtung (56) nach einem der vorgenannten Ansprüche, **dadurch gekennzeichnet, dass** elektrisch parallel zu einem Energiespeicher (66,68) ein Widerstand (86,88) schaltbar ist.

4. Vorrichtung (56) nach einem der vorgenannten Ansprüche, **dadurch gekennzeichnet, dass** der Energiespeicher (66,68) ein Doppelschichtkondensator ist.

5. Vorrichtung (56) nach einem der Ansprüche 1 bis 3, **dadurch gekennzeichnet, dass** der Energiespeicher (66,68) eine Batterie ist.

6. Vorrichtung (56) nach einem der vorgenannten Ansprüche, **dadurch gekennzeichnet, dass** die Einspeiseschaltung eine Netzdrossel (10) aufweist, die zwischen der positiven Stromschiene (16) des Spannungszwischenkreises (18) und einem einphasigen Gleichspannungsnetz schaltbar ist.

7. Vorrichtung (56) nach einem der Ansprüche 1 bis 5, **dadurch gekennzeichnet, dass** die Einspeiseschaltung wenigstens einen Vierquadrantenstellen (96) aufweist, der wechselspannungsseitig mittels eines Traktionstransformators (100) mit einem einphasigen Wechselspannungsnetz verbindbar ist und gleichspannungsseitig mit der positiven und negativen Stromschiene (16,20) des Spannungszwischenkreises (18) verbunden ist.

## Claims

1. Apparatus (56) for coupling energy storage devices (66, 68) to an intermediate voltage circuit (18) in a traction power converter comprising an infeed circuit, an intermediate voltage circuit capacitor (26) and a self-guided power converter (38) on the load side, with this apparatus (56) having two bridge sections (58, 60) each with two electrically series-connected semiconductor switches (T9, T10, T11, T12) which can be disconnected and two chokes (62, 64), wherein an energy storage device (66, 68) is electrically connected in parallel in each instance with a bridge section (58, 60), wherein each bridge section (58, 60) is electrically conductively connected by one terminal (70, 74) to a positive or negative busbar (16, 20) of the intermediate voltage circuit (18) and by another terminal (72, 76) by means of a choke (64, 62) to a connecting point (80, 78) of two disconnectable semiconductor switches (T11, T12; T09, T10) of the other bridge section (60, 58).

2. Apparatus (56) according to claim 1, **characterised in that** the terminal (72, 76) of each bridge section (58, 60), to which a choke (64, 62) is connected, is electrically conductively connected by means of a protective diode (82, 84) to a negative or positive busbar (16, 20) of the intermediate voltage circuit (18).

3. Apparatus (56) according to one of the afore-cited claims, **characterised in that** a resistor (86, 88) can be electrically connected in parallel with an energy storage device (66, 68).

4. Apparatus (56) according to one of the afore-cited claims, **characterised in that** the energy storage device (66, 68) is a dual layer capacitor.

5. Apparatus (56) according to one of claims 1 to 3, **characterised in that** the energy storage device (66, 68) is a battery.

6. Apparatus (56) according to one of the afore-cited claims, **characterised in that** the infeed circuit comprises a power choke (10), which can be connected between the positive busbar (16) of the intermediate voltage circuit (18) and a single phase dc power supply.

7. Apparatus (56) according to one of claims 1 to 5, **characterised in that** the infeed circuit comprises at least one four-quadrant point (96), which can be connected on the ac side to a single phase ac power supply by means of a traction transformer (100) and on the dc side to the positive and negative busbar (16, 20) of the intermediate voltage circuit (18).

## Revendications

1. Dispositif ( 56 ) de couplage d'accumulateurs ( 66, 68 ) d'énergie à un circuit ( 18 ) intermédiaire de tension d'un convertisseur de traction, qui a un circuit d'alimentation, un condensateur ( 26 ) de circuit intermédiaire de tension et un convertisseur ( 38 ) à commutation automatique du côté de la charge, ce dispositif ( 56 ) ayant deux branches ( 58, 60 ) de pont ayant respectivement deux commutateurs ( T9, T10 ; T11, T12 ) à semi-conducteur blocables, montés électriquement en série et deux bobines ( 62, 64 ) de self, un accumulateur ( 66, 68 ) d'énergie étant monté électriquement en parallèle à respectivement une branche ( 58, 60 ) du pont, chaque branche ( 58, 60 ) du pont étant reliée d'une manière conductrice de l'électricité par une borne ( 70, 74 ) à une barre ( 16, 20 ) de courant positive ou négative du circuit ( 18 ) intermédiaire de tension et par une autre borne ( 72, 76 ) au moyen d'une bobine ( 64, 62 ) de self à un point ( 80, 8 ) de liaison de deux commutateurs ( T11, T12 ; T09, T10 ) à semi-conducteur blocables de l'autre branche ( 60, 58 ) du pont.

2. Dispositif ( 56 ) suivant la revendication 1, **caractérisé en ce que** la borne ( 72, 76 ) de chacune des branches ( 58, 60 ) du pont, à laquelle est reliée une bobine ( 64, 62 ) de self, est reliée d'une manière conductrice de l'électricité au moyen d'une diode ( 82, 84 ) de protection à une barre ( 16, 20 ) de courant négative ou positive du circuit ( 18 ) intermédiaire de tension.

3. Dispositif ( 56 ) suivant l'une des revendications précédentes, **caractérisé en ce qu'**une résistance ( 86, 88 ) peut être montée électriquement en parallèle à un accumulateur ( 66, 68 ) d'énergie.

4. Dispositif ( 56 ) suivant l'une des revendications précédentes, **caractérisé en ce que** l'accumulateur ( 66, 68 ) d'énergie est un condensateur à couches doubles.

5. Dispositif ( 56 ) suivant l'une des revendications 1 à 3, **caractérisé en ce que** l'accumulateur ( 66, 68 ) d'énergie est un condensateur.

6. Dispositif ( 56 ) suivant l'une des revendications précédentes, **caractérisé en ce que** le circuit d'alimentation a une bobine ( 10 ) de réseau, qui peut être montée entre la barre ( 16 ) de courant positive du circuit ( 18 ) intermédiaire de tension et un réseau de tension continue monophasé.

7. Dispositif ( 56 ) suivant l'une des revendications 1 à 5, **caractérisé en ce que** le circuit d'alimentation a au moins un point ( 96 ) à quatre cadrans qui peut, du côté de la tension alternative, être relié à un réseau de tension alternative monophasé au moyen d'un transformateur ( 100 ) de traction et qui, du côté de la tension continue, est relié à la barre ( 16, 20 ) de courant positive et négative du circuit ( 18 ) intermédiaire de tension.
